# EUROPEAN PATENT APPLICATION

(11) **EP 1 128 517 A2**
(43) Date of publication of application: **29.08.2001**
(21) Application number: 01103677.9
(22) Date of filing: 23.02.2001
(51) Int. Cl.: H02J 7/00

(54) **Adapters for rechargeable battery packs**

(30) Priority: 24.02.2000 JP 2000046860; 29.02.2000 JP 2000052791
(71) Applicant: MAKITA CORPORATION, Anjo-shi, Aichi-ken 446-0072 (JP)
(72) Inventor: Sakakibara, Kazuyuki, Anjo-shi, Aichi-ken 446-0072 (JP); Muramatsu, Tomoo, Anjo-shi, Aichi-ken 446-0072 (JP)
(74) Representative: VOSSIUS & PARTNER

(57) **Abstract**

Control portion 26 of battery charger 10 controls power source circuit 24 upon receipt of instructions from control portion 41 of adapter 30. Based upon these instructions, adapter 30 enables charging operations for battery pack 50B that does not have a memory storing charging parameters and/or information. Moreover, battery charger 10 also may be designed to charge a battery pack 50B even though battery charger was not originally designed to charge battery pack 50B. Adapter 30 also may enable charging operations for battery pack 50 that contains memory 61 storing charging parameters and/or battery identification information. In this case, adapter 30 reads information stored in memory 61 and generates optimal charging instructions based upon a charging program stored in control portion 41 (Fig. 1).

## Description

The present invention relates to battery chargers for charging rechargeable battery packs and adapters that can couple rechargeable battery packs to battery chargers. The battery chargers and adapters may preferably be utilized with power tools or other appliances that utilize rechargeable battery packs.

European Patent Publication No. 966090 describes a battery charger and rechargeable battery pack for power tools. In this system, the rechargeable battery pack contains a processor that stores a charging program for charging the rechargeable battery pack. This system permits a new battery technology to be utilized with an old charger, because the battery charger can utilize the charging program stored in the battery pack to charge the batteries. However, this design suffers from several shortcomings.

First, the known system requires a processor and memory to be provided in each battery pack. Because processors and memory are generally expensive components, including these components in the battery pack will necessarily increase the cost of the battery pack. Second, if the appropriate charging program is not stored in the charger or the battery pack, the known system can not charge the rechargeable battery pack. That is, because the battery pack can only be charged using a program that was stored in the battery pack memory or the battery charger memory at the time of manufacture, it is impossible to charge the battery pack if an appropriate charging program is not stored in either the charger or the battery pack.

Further, the known charger utilizes the same ground line for the battery charging circuit and the battery temperature sensing circuit. As a result, overlapping switching noise in the ground line can make it difficult or impossible to accurately determine the battery temperature during charging.

Moreover, the known charger/battery pack does not provide means for utilizing the particular charging parameters of the charger, because the charger is not adapted to communicate information concerning the charging parameters of the battery charger to the processor of the rechargeable battery pack.

It is, accordingly, an object of the present teachings to overcome one or more of the problems in the known art.

In one aspect of the present teachings, an adapter is taught that preferably includes a first set of terminals to communicate with a battery pack and a second set of terminals to communicate with a battery charger. Thus, the adapter may be, for example, interposed between the battery pack and the battery charger during a charging operation. In addition, the adapter may include a processor and memory and the memory may store one or more battery charging programs and the adapter processor may execute the charging programs. The adapter processor may then communicate appropriate charging instructions to the battery charger and the control of the charging operation is appropriately performed for the particular battery type contained in the battery pack.

Thus, this aspect of the present teachings provides several advantages over the known art. First, it is possible to charge batteries that have a memory provided within the rechargeable battery pack, which memory stores charging parameters and/or battery identification information. Thus, the adapter can be designed to recognize battery types and execute the appropriate charging program, which charging program will be communicated to the battery charger. Thus, the battery charger can charge a wider variety of battery types.

Second, it is not necessary to provide a processor within each battery pack. For example, a single power tool may be operated with several different battery packs during usual operation. Thus, while one or more battery packs are being charged, a previously charged battery pack can be utilized to perform operations with the tool. In this manner, the power tool can be continuously operated by replacing the battery packs when necessary. However, if each battery pack is required to have a processor and a memory storing the particular charging program for that battery, the cost of each battery pack will necessarily be relatively high. By commonly utilizing the same adapter for each of the battery packs, the overall cost of the charging system can be reduced, because only a single processor is required for a plurality of rechargeable battery packs.

In another aspect of the present teachings, a battery charger may include a current source adapted to provide a charging current to the rechargeable battery. A switch may be provided to control the current that is actually applied to the battery. Preferably, the control instructions for the switch may be selectively generated by either a processor disposed within the battery charger or by a processor that is external to the battery charger. For example, a processor disposed within the adapter may provide appropriate instructions to control the current source switch. As used throughout the present specification, "external processor" may be, for example, a processor disposed within the adapter or a processor disposed within the battery pack.

The battery charger also preferably may have terminals for communicating with the adapter. More preferably, the battery charger also has terminals for communicating directly with the rechargeable battery pack. Thus, the battery charger is optimally designed to (1) directly accept a battery pack and (2) accept an adapter interposed between the battery pack and the battery charger. This design provides greater flexibility for the battery charger, so that the battery charger can be remotely controlled to charge new battery types invented after the battery charger has been manufactured.

The battery charger may also include a processor to perform one or more functions and a memory to store various charging programs. For example, in one embodiment, the processor may execute a program when a rechargeable battery pack has been coupled to charger terminals and is ready for charging. The processor may also identify the type of battery contained in the battery pack.

In another embodiment, the processor may execute a charging program stored in the charger memory based upon the type of battery contained in the battery pack. In another embodiment, the processor may receive instructions from an external processor, which may be contained in either the battery pack or the adapter, to control the current source switch. In another embodiment, the instructions from the external processor may be directly communicated to the switch. In this case, the charging processor may execute a program to permit the external processor to directly control the current source switch. In another embodiment, the battery charger can be constructed without a processor and the external processor of either the adapter or the rechargeable battery pack may directly instruct a switch disposed within the battery charger in order to control the charging current supplied to the rechargeable batteries.

In another embodiment, the battery pack may include a battery temperature sensor disposed proximally to the batteries. Signals generated by the battery temperature sensor may then be communicated to the external processor, again either in the battery pack or the adapter, or the signals may be communicated to the battery charger processor. Either the external processor or the battery charger processor may execute a program to derive information from the signals generated by the battery temperature sensor. For example, the processor may determine the temperature of the battery and utilize this information to select an optimal charging current. In addition or in the alternative, the processor may determine a time based derivative of the battery temperature during the charging operation and use the temperature change rate to select the optimal charging current.

The battery charger and/or the adapter may optionally include a means for detecting the voltage of the battery before and during the charging operation. A variety of circuit designs may naturally be utilized to determine the voltage of the battery and no limitation is placed-on the battery voltage detector. For example, various- analog circuits may be utilized to directly sense the voltage of the battery. In the alternative, the battery voltage may be converted to a digital value and a processor may determine the battery voltage. In either case, information concerning the battery voltage may be communicated to one or both of the battery charger processor or the external processor and this battery voltage information may be utilized during the battery charging operation to select the optimal charging current.

In another aspect of the present teachings, the battery charger may include a communication port to communicate information between the external processor and the battery charger processor. Further, the charger may include charging terminals that may be coupled to the battery to supply the charging current to the battery pack. The charger also may include a terminal coupled to a regulated voltage source, which regulated voltage may be supplied to operate the external processor. Further, the charger may also include two or more separate ground lines to provide a ground source to the adapter and/or battery pack.

In another aspect of the present teachings, the battery charger processor may control the charging current based upon instructions from the external processor. Thus, the charger is adapted to charge a wide variety of battery types, even though a specific charging program is not stored in the battery charger memory. In another aspect of the present teachings, the charging processor may communicate information concerning the charging current source or other charging parameters to the external processor. As a result, the external processor can incorporate the charging capabilities of the battery charger into the charging program and generate optimal charging instructions for the current source switch.

In another aspect of the present teachings, the charging system may include a resistance that is serially connected to the battery temperature detector, e.g. a thermistor, disposed in the battery pack. Either the charger processor or the external-processor may detect the temperature of the batteries by sensing the potential across the resistance and the processor may utilize this information to instruct the charger current source. A regulated power supply may be generated within the battery charger and this regulated power supply may be communicated to the external processor(s). Thus, the charger may have output terminals to supply the regulated power supply to the external processor(s).

The regulated power supply allows the external processor to accurately detect the temperature of the batteries based upon the potential across the resistance that is serially connected to the battery temperature sensor. Thus, the external processor may generate optimal charging instructions. More preferably, the external processor and the battery temperature sensor utilize a regulated power supply and this regulated power supply is separate and distinct from a regulated power supply utilized by the battery charging circuit. Even more preferably, a first ground line is utilized for the external processor and the battery temperature sensor and a second ground line is utilized for the battery charging circuit. By separating the regulated power supply and the ground lines, switching noises in the charging circuit will not affect the performance of the external processor or the temperature battery sensor. Thus, accuracy of the external processor and the temperature sensor can be remarkably increased.

More specifically, the battery charger may have first and second ground terminals, which are independent of each other to provide two independent ground lines. The first ground terminal may be coupled to the battery and the charging circuit. The second ground terminal may be coupled to the external processor and/or the battery temperature sensor. As a result, it is possible to eliminate fluctuations in the regulated voltage supply and to improve the accuracy of the processed information in the external devices (i.e. the battery pack and/or the adapter). Because no potential difference (offset voltage) results between the ground voltage level of the external apparatus and the ground voltage level of the battery temperature-sensor (e.g. thermistor), fluctuations are imposed on the ground of the thermistor. Thus, the battery temperature may be accurately determined based upon the voltage across the resistor (partial pressure resistance).

By providing two grounds, this design can overcome problems in properly detecting the battery temperature. Preferably, a thermistor is serially connected to a fixed value resistor (partial pressure resistance) in a voltage divider configuration. The battery temperature can be detected based upon the voltage at the node between the thermistor and the fixed value resistor. If the temperature sensing circuit utilizes the same ground as the charging circuit, the presence of overlapping switching noise in the charge current, which is caused by utilizing a duty cycle to charge the batteries, makes it difficult or impossible to accurately determine the battery temperature based upon the voltage of the fixed value resistance.

Moreover, if a grounding terminal of the thermistor is commonly connected to a negative terminal of the batteries (grounding terminal for conducting charge current), a potential difference (offset voltage) will be generated between the ground voltage of the battery and the ground voltage of the adapter. More particularly, because the charging current is large due to the contact resistance between the ground terminal of the adapter and the ground terminal of the batteries, a large voltage drop will result. The ground level of the thermistor will vary accordingly and it will be difficult to accurately determine the battery temperature based upon the voltage drop across the fixed value resistance. Thus, by providing separate ground lines for the charging circuit and the battery temperature detector, the battery temperature can be more accurately determined.

Further, the present battery charger may be adapted to communicate charging parameters to the external processor in order to optimize charging conditions. For example, the processor of the adapter and/or the battery pack may be programmed to operate two or more different charging programs and the optimal charging program may be selected based upon the charging parameters of the battery charger. In one embodiment, the external processor may execute a rapid charging program, if the battery charger is capable of supplying a relatively high charging current (e.g., 2 amps). In addition, the external processor may execute a normal charging program, if the battery charger is not capable of supplying a relatively high charging current (e.g., the charger is limited to 1 amp). Thus, because the external processor can check the charging parameters of the battery charger, the optimal charging program can be selected and, for example, charging time can be minimized.

In yet another embodiment, the processor may be omitted from the battery charger. In this case, the external processor may directly control a current source switch in the battery charger. For example, the adapter may include a processor and a memory and may execute a charging program. Instructions from the adapter processor are directly communicated to the switch that controls the charging current supplied to the rechargeable battery pack. As a result, the cost of the battery charger can be reduced, because the battery charger is only required to have a current source generator and a communication port for receiving switching instructions from the external processor.

In another aspect of the present teachings, techniques and apparatus for eliminating battery memory effects are taught.

These aspects and features may be utilized singularly or in combination in order to make improved battery chargers, adapters and battery packs. In addition, other objects, features and advantages of the present teachings will be readily understood after reading the following detailed description together with the accompanying drawings and the claims. Of course, the additional features and aspects disclosed herein also may be utilized singularly or in combination with the above-described aspects and features.

### BRIEF DESCRIPTION OF THE DRAWINGS

Fig. 1(A) is a block diagram of a battery charger directly coupled to a battery pack containing a memory.
Fig. 1(B) is a block diagram showing a first representative battery charger coupled to an adapter having a processor, wherein the adapter is coupled to the battery pack.
Fig. 2 is a perspective view illustrating an external appearance of a representative battery charger according to the first embodiment.
Fig. 3 is a perspective view illustrating an external appearance of a battery pack having a memory.
Fig. 4 is aside view of a battery-powered drill using the battery pack of Fig. 3.
Fig. 5 is a perspective view illustrating an external appearance of a battery pack that does not have a memory.
Fig. 6 is a side view of a battery-powered drill using the battery pack of Fig. 5.
Fig. 7 is a side view of a first representative adapter.
Fig. 8 is a flowchart that shows processing steps performed by a processor that is preferably housed within the adapter.
Fig. 9 is a flowchart that shows processing steps performed by a processor that is preferably housed within the battery charger.
Fig. 10 is a block diagram of a battery charger, adapter and battery pack according
to a first modification of the first representative example.
Fig. 11 is a block diagram of a battery charger, adapter and battery pack according to a second modification of the first representative example.
Fig. 12 is a block diagram of a battery charger and a battery pack according to a third modification of the first representative example.
Fig. 13(A) is a block diagram of a second representative battery charger and battery pack.
Fig. 13(B) is block diagram of the second representative battery charger and battery pack, but further including an adapter.
Fig. 14 is a side view of the second representative battery charger, adapter and battery pack.
Fig. 15 is a block diagram of a battery charger, adapter and battery pack according to a modification of the second representative example.
Fig. 16 is a flowchart that shows processing steps performed by a processor that is preferably housed within the adapter.
Fig. 17 is a flowchart that shows a subroutine of a charging program that may be utilized with the apparatus shown in Fig. 15.
Fig. 18 is a block diagram of a representative battery charger coupled to a battery pack containing a memory that stores battery charging parameters.
Fig. 19 shows the battery charger of Fig. 18 coupled to a representative adapter and a battery pack that does not contain a memory.
Fig. 20 shows the battery charger of Fig. 18 coupled to an adapter and a battery pack containing a memory that stores battery charging parameters.
Fig. 21 shows a modification of the battery charger and battery pack shown in Fig. 18.
Fig. 22 shows a modification of the battery charger, adapter and battery pack shown in Fig. 19.
Fig. 23 shows a modification of the battery charger, adapter and battery pack shown in Fig. 20.
Fig. 24 shows a modification of the battery charger, adapter and battery pack shown in Fig. 19.
Fig. 25 shows a modification of the battery charger, adapter and battery pack shown in Figs. 18 and 20.

### DETAILED DESCRIPTION OF THE INVENTIONS

In one aspect of the present teachings, adapters are taught that can remotely control the charging operation of a battery charger. In one embodiment, the adapter may be interposed between the battery charger and a battery pack containing rechargeable batteries. The adapter may optionally include a processor programmed to execute a charging program. The adapter may also include a communication port adapted to communicate charging instructions to the battery charger and more specifically to a switch that controls the supply of charging current to the batteries. The battery pack may also optionally include a memory, such as an EEPROM, that stores information concerning the type of batteries disposed within the battery pack and/or charging parameters. Alternatively, the battery pack may not contain such a memory and the adapter may be constructed to recognize a variety of battery types using one or more battery identification methods. Thus, by using such an adapter, the battery charger may be remotely controlled to charge a battery pack that does not comprise a memory-for storing battery information or other charging parameters.

The battery packs may include a processor, although the battery packs preferably do not comprise a processor in order to reduce the manufacturing cost of the battery pack. However, the battery packs may comprise a memory that is readable by the adapter processor in order to provide battery identification information and/or charging parameters to the adapter processor. The battery pack may also preferably include a temperature sensor disposed proximally to the batteries to accurately generate battery temperature signals. Either the adapter processor and/or the charger processor may process these battery temperature signals in order to select optimal charging currents.

Because the instructions for controlling of charge current supplied to the rechargeable batteries can be generated externally from the battery charger, the battery charger can preferably charge a wide variety of battery types. Moreover, the charger can easily charge battery types that are invented after the construction of the charger, thereby increasing the useful life of the battery charger. Moreover, by incorporating the processor into the adapter, the manufacturing cost of the battery packs can be minimized.

Representative battery chargers may preferably include a current source adapted to provide charging current to the rechargeable batteries. A switch or other control means may be coupled to the current source in order to control the amount of current that is supplied to the batteries. The charger processor, the adapter processor and/or the battery pack processor, may control this switch or other control means. Preferably, output terminals are provided on the battery charger to supplying a regulated voltage to the processor of the adapter and/or the battery pack.

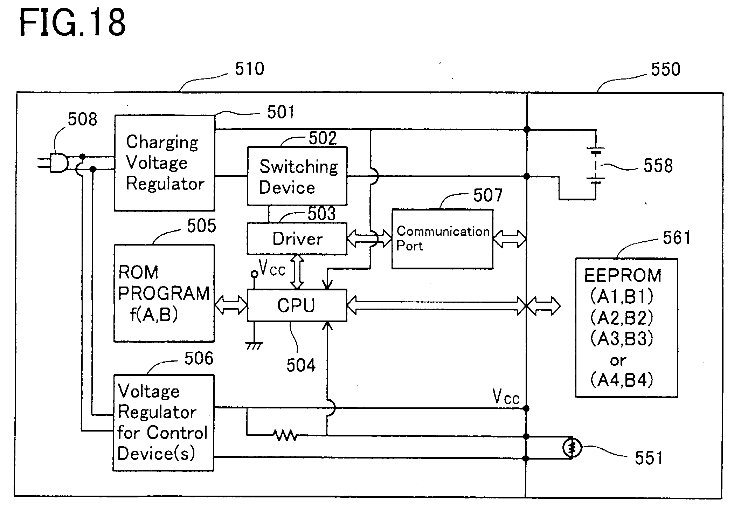

Figs. 18-20 show three representative uses of battery charger 510 according to the present teachings. As shown in Fig. 18, battery charger 510 may include a power supply connector 508 that may be, for example, connected to a commercial power source. The inputted power supply may be supplied to a charging voltage regulator 501 and a voltage regulator 506 for the control device(s). The charging voltage regulator 501. generates a charging voltage that will be supplied to the rechargeable batteries 558 disposed within battery pack 550. Voltage regulator 506 generates a regulated power supply Vcc, e.g. 5 volts, that may be utilized by central processing unit (CPU) 504 and by external CPUs, as will be described below.

CPU 504 may execute charging programs stored in memory 505, which may be an electrically erasable programmable read only memory (EEPROM) or other suitable memory. No particular restrictions are place on the type of memory or the type of processor utilized with the present teachings. CPU 504 may supply charging current values or signals to driver 503 that controls switching device 502 in order to supply an appropriate charging current to batteries 558. For example, CPU 504 may execute a variable duty cycle in order to supply an optimal charging current to batteries 558. Battery charger 510 also may include a communication port 507 for communicating with an external CPU, as will be further described below.

In Fig. 18, battery pack 550 includes EEPROM 561, battery temperature sensor 551 and rechargeable batteries 558, which may be for example nickel metal hydride batteries. In this example, EEPROM 561 may store battery charging parameters (e.g. A1, B1, etc.) that may be communicated to CPU 504. Memory 505 may be programmed to include an appropriate charging program f(A,B) for batteries 558. CPU 504 may read the battery charging parameters (e.g. A1, B1) from EEPROM 561 and utilize these charging parameters in the charging program in order generate optimal charging instructions for driver 503 and switching device 502.

In one preferred, but optional aspect, of the present teachings, CPU 504 may utilize battery temperature signals generated by battery temperature sensor 551, which may be a thermistor that is disposed proximally to batteries 558, to generate the charging current instructions for batteries 558. Thus, in this embodiment, battery pack 550 may be directly mounted on battery charger 510 and communication port 507 is not utilized. Further, the CPU also may utilize the battery voltage to determine the optimal charging current to supply to batteries 558.

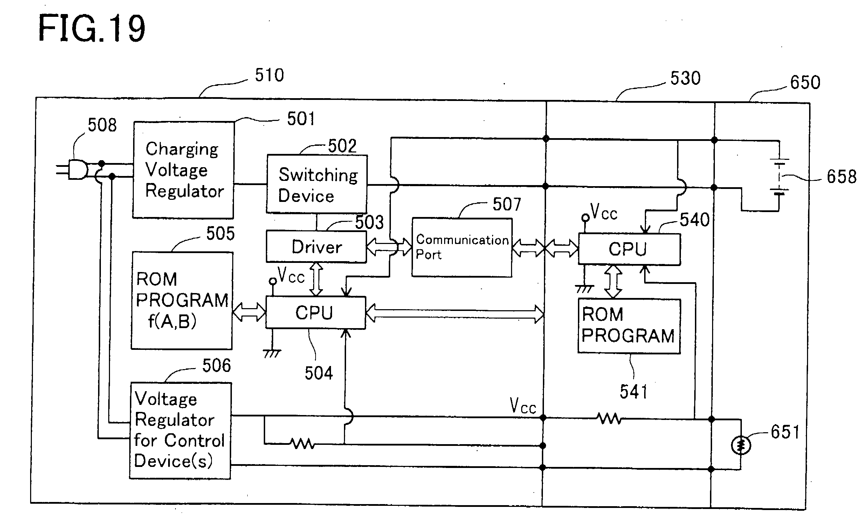

Fig. 19 shows an identical battery charger 510 and therefore further description of battery charger 510 in Fig. 19 is not necessary. However, in Fig. 19, adapter 530 is interposed between battery pack 650 and battery charger 510. In this embodiment, battery pack 650 does not include a memory that stores battery charging parameters or battery identification information.

Preferably, adapter 530 -may-include CPU 540 and memory 541, which may be for example an EEPROM. Memory 541 may store, for example, a common program for several types of batteries that do not include a memory. CPU 540 may, for example, utilize the battery temperature information and the battery voltage information to generate optimal charging current values for controlling driver 503 and switching device 502, In this case, CPU 540 is adapted to remotely control driver 503 and switching device 502 in order to supply an appropriate charging current to batteries 558.

The charging current values generated by CPU 540 may be communicated to battery charger 510 through communication port 507. The charging current values may be, for example, an optimal duty cycle for directly controlling switching device 502 via driver 503 or may be instructions for generating the duty cycle. In the latter case, CPU 504 may generate the actual duty cycle signals.

Although CPU 540 may preferably directly control driver 503 and switching device 502, and thus bypass CPU 504, it is also possible for CPU 540 to communicate with CPU 504 and CPU 504 will supply control instructions to driver 503 and switching device 502.

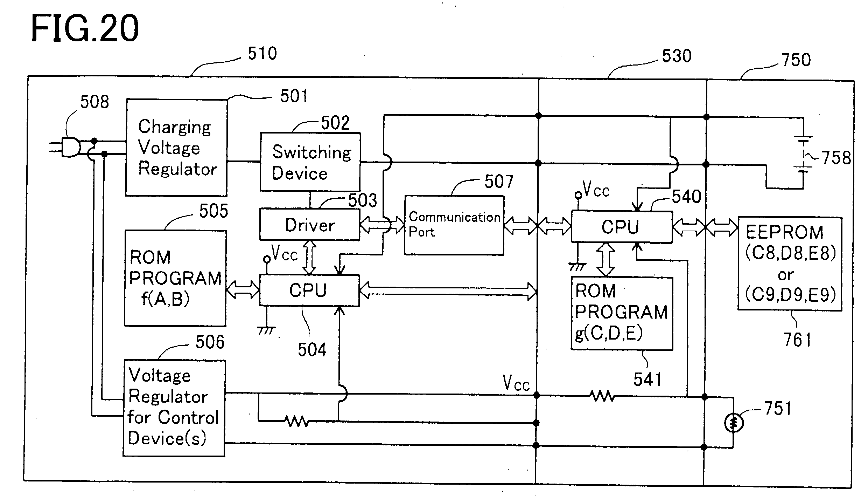

Fig. 20 again shows the same battery charger 510 as Figs. 18 and 19. However, in this embodiment, battery pack 750 includes a memory, such as an EEPROM, that stores battery charging parameters (e.g. C8, D8, E8). For example, if battery charger 510 has not be programmed to generate an appropriate charging program for batteries 758, because for example, batteries 758 were invented after the construction of battery charger 510, adapter 530 may be utilized to generate appropriate charging programs. Thus, memory 541 stores a charging program g(C, D, E) that is different from the charging program f(A,B) stored in memory 505. Thus, adapter 530 communicates with memory 761 in order to obtain the charging parameters (e.g. C8, D8, E8) stored within memory 761. CPU 540 then utilizes these charging parameters in the charging program g(C, D, E) stored in memory 541 and directly instructs driver 503 and switching device 502 through-communication-port 507.

As discussed in further detail below, voltage regulator 506 may be coupled to a ground line that is separate from the ground line coupled to charging voltage regulator 501. By providing separate ground lines, switching noises generated by switching device 502 do not affect-the operation of CPU 504, 540 and battery temperature detector 551, 651, 751.

Thus, Figs. 18-20 show a highly versatile battery charger 510 and adapter 530 that may be utilized to charge various types of batteries 558, 658, 758 in a compact, efficient and relatively inexpensive design. Thus, unlike known techniques, it is not necessary to provide a CPU in each battery pack, which would necessarily increase the cost of manufacturing the battery pack. Further, because several battery packs are typically charged by a single battery charger during power tool operation, the overall cost of the charging system can be reduced by utilizing the present adapters.

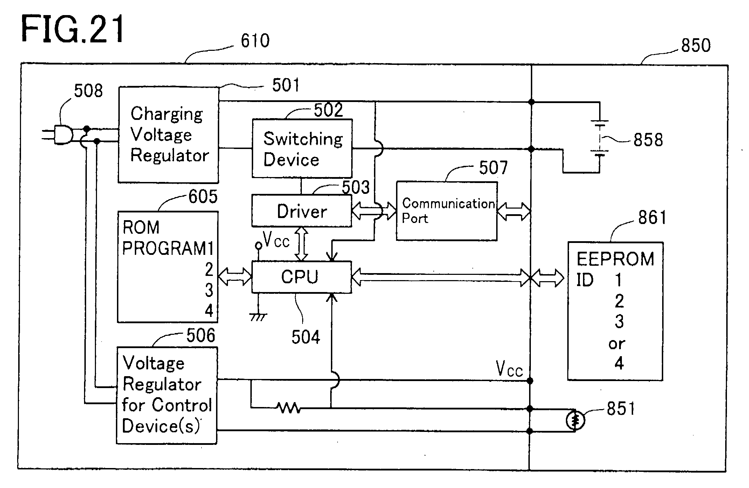

Figs. 21-23 show modifications of the apparatus disclosed in Figs. 18-20. Because substantial portions of the two designs are identical, only differences between the two designs will be described. In Fig. 21, battery pack 850 includes a memory 861 that stores battery identification information (ID 1, 2, 3, 4), which may be communicated to CPU 504. Memory 605 stores a set of charging programs (1, 2, 3, 4) and CPU 504 selects the most appropriate charging program based upon the battery identification information stored in memory 861. CPU 504 may then execute the charging program as described above with reference to Fig. 18.

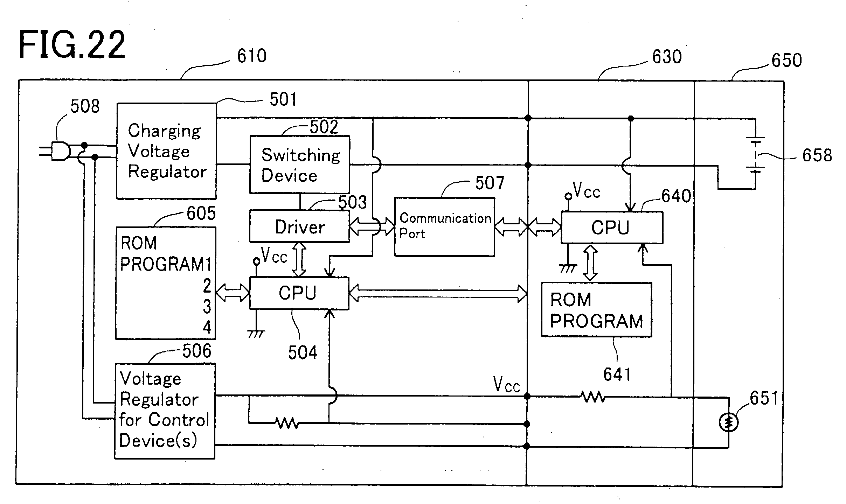

In Fig. 22, battery pack 658, which may be the same battery pack 658 as in Fig. 19, does not include a memory and battery identification information. Thus, CPU 640 may execute the charging program stored in EEPROM 641. Driver 503 and switching device 502 may be remotely controlled by CPU 640, as discussed above with reference to Fig. 19.

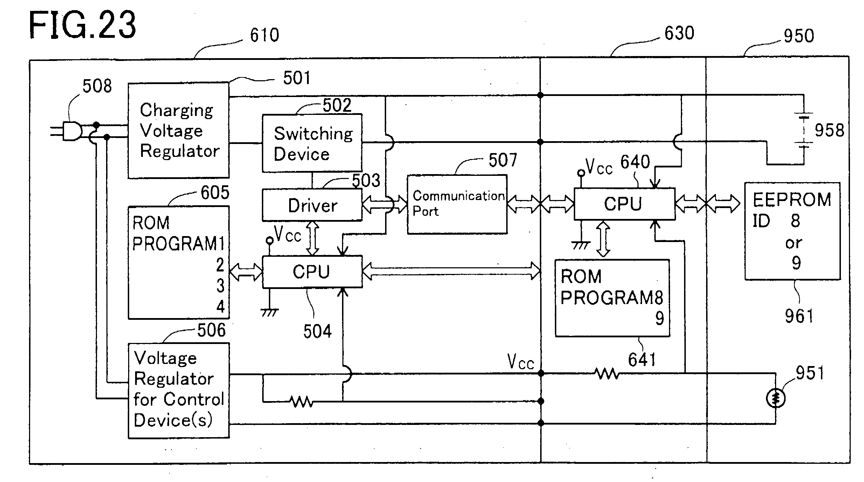

In Fig. 23, battery pack 950 includes a memory 961, which includes battery identification information (8, 9). However, in this case, battery charger 610 is not programmed to recognize the battery identification information stored in memory 961. Therefore, memory 641 may contain one or more programs (8, 9) utilized to recognize the battery identification information (8, 9) stored in memory 961 and select the appropriate charging program from memory 641. The charging program may then be executed as discussed above with reference to Fig. 20.

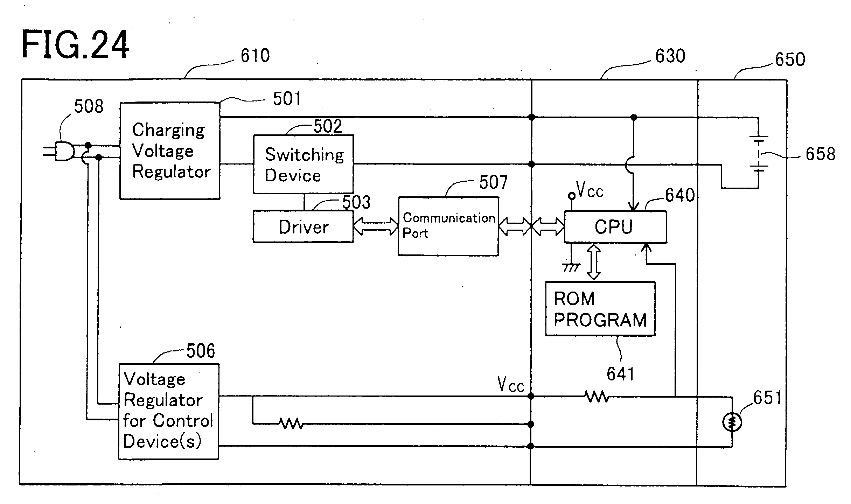

Fig. 24 shows a modification of the battery charger, adapter and battery pack shown in Fig. 19. Because adapter 630 may directly control driver 503 and switching device 502 via communication port 507, it is possible to omit the processor and memory from battery charger 610. Thus, in this aspect of the present teachings, adapter 630 contains all the processing circuits that are necessary to generate the optimal duty cycle for controlling driver 503 and switching device 502 and the manufacturing cost of battery charger 610 can be reduced.

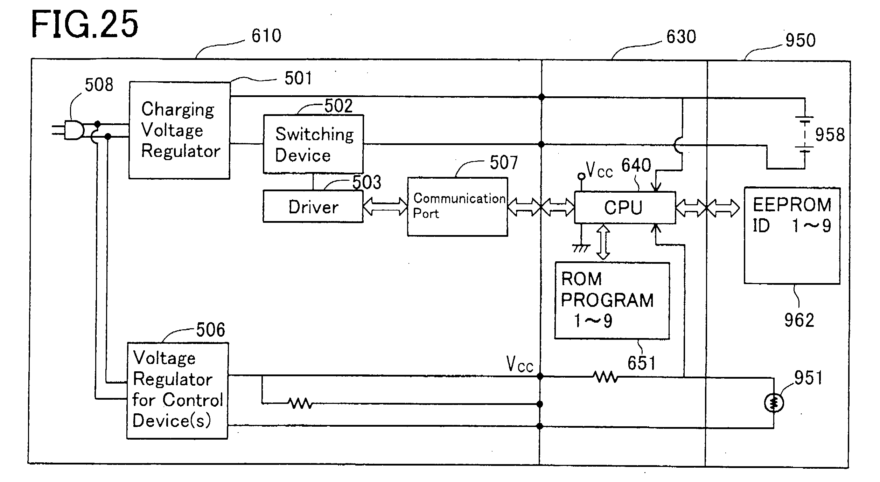

Fig. 25 shows a modification of the battery charger, adapter and battery pack shown in Figs. 18 and 20. As discussed with respect to Fig. 24, the processor and memory can be omitted from these embodiments as well. Thus, CPU 640 can directly control driver 503 and switching device 502 and the need for a processor and memory within battery charger 610 may be eliminated.

Each of the additional features and method steps disclosed above and below may be utilized separately or in conjunction with other features and method steps to provide improved battery chargers, adapters and battery packs and methods for making and using the same. Detailed representative examples of the present teachings, which examples will be described below, utilize many of these additional features and method steps in conjunction. However, this detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed-description-may not be necessary to practice the present teachings in the broadest sense, and are instead taught merely to particularly describe representative and preferred embodiments of the present teachings, which will be explained below in further detail with reference to the figures. Of course, features and steps described in this specification may be combined in ways that are not specifically enumerated in order to obtain other usual and novel embodiments of the present teachings.

### First Detailed Representative Embodiment

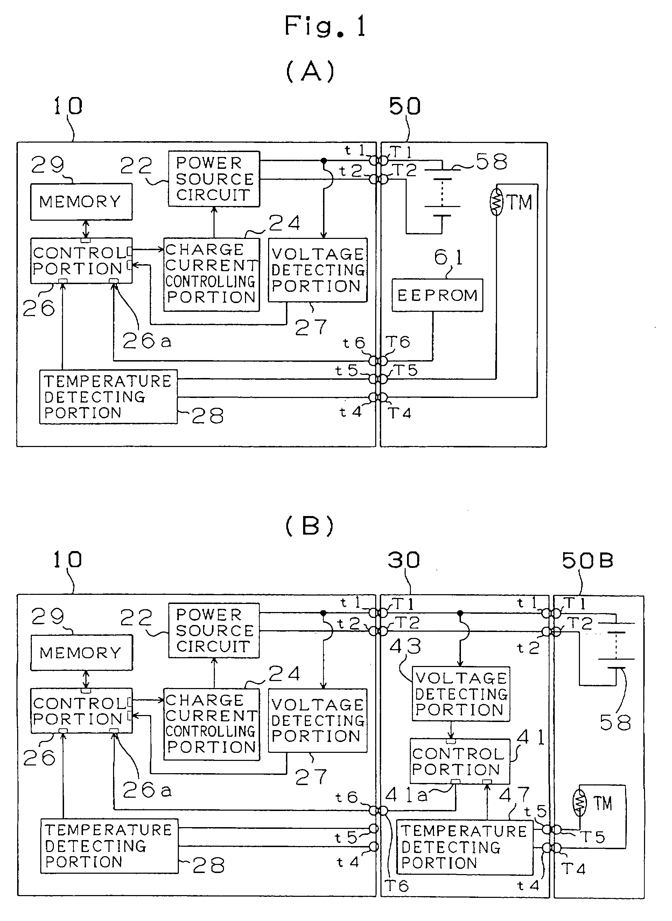

As shown in Figure 1(A), battery charger 10 may optionally be designed to directly charge a battery pack 50 that contains a memory 61, such as an EEPROM, that stores charging parameters and/or battery identification information. As shown in Figure 1(B), battery charger 10 also may be designed to charge battery pack 50B that does not contain a memory by interposing adapter 30 between battery charger 10 and battery pack 50B.

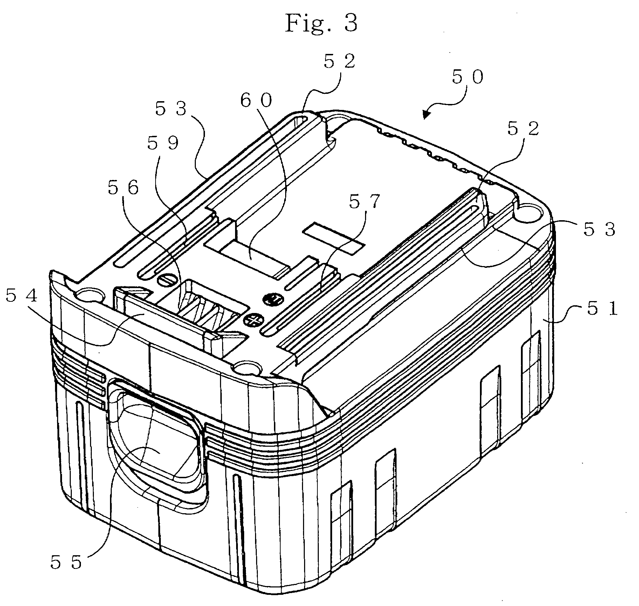

Battery pack 50, which includes EEPROM 61 and may be directly charged by battery charger 10, will first be explained with reference to Fig. 3. Battery pack 50 may comprise a variety of rechargeable batteries 58, such as nickel metal hydride batteries, that are serially connected within a housing 51 made of a resin material. Naturally, various battery types may be utilized with the present teachings and moreover, the present teachings specifically contemplate the use of battery technologies that have not yet been invented, because the battery charger and adapter are designed to be utilized with new technologies. Further, housing 51 may be constructed from a variety of materials and the particular type of housing 51 utilized with the present teachings is not limited.

The housing 51 may have, e.g., a substantially prism-like shape. As shown in Fig. 1(A), temperature sensor TM may be disposed within battery pack 50 proximally to the batteries 58 in order to generate signals based upon the temperature of the batteries 58. Temperature sensor TM may preferably be a thermistor having an electric resistance that varies depending on the battery temperature. However, various other types of temperature sensors certainly may be utilized with the present teachings, such as thermocouples, etc. EEPROM 61 may store various types of information, such as a battery identification code and/or charging parameters.

As shown in Fig. 3, fitting portions 52 may have fitting grooves 53 that may be inserted into corresponding grooves in a power tool, such as battery-powered drill 70, or into corresponding grooves in battery charger 10. These fitting portions 52 may be formed on an upper end side of housing 51 and may be parallel to each other in a rail-like manner. Hook 54 is adapted to be withdrawn or inserted in the vertical direction and is disposed on a portion located on one end of fitting portions 52. Hook 54 is integrally formed with lever 55 that is provided on a lateral surface of housing 51 and is upwardly urged by a coil spring (not shown). In this manner, battery pack 50 may engage specified hook grooves that are formed on these members when battery pack 50 is mounted on battery-powered drill 70 or battery charger 10. This design prevents battery pack 50 from easily dislodging from battery-powered drill 70 or battery charger 10. By pressing lever 55 in the downward direction (as shown in Fig. 3) of housing 51 against the urging force of the coil spring, hook 54 will simultaneously move downward. As a result, hook 54 will disengage from a corresponding hook groove and battery pack 50 may be detached from battery-powered drill 70 or battery charger 10.

Ventilating aperture 56, positive terminal groove 57, negative terminal groove 59 and connector 60 may be disposed between fitting portions 52 on the upper side of housing 51. Ventilating aperture 56 is disposed so that it may communicate with forced air aperture 16 provided in battery charger 10 when battery pack 50 is mounted on battery charger 10. Accordingly, cooling air may be forced into battery pack 50 by a cooling fan (not shown) that is disposed within battery charger 10 so as to cool battery pack 50 during the battery charging operation.

Positive terminal T1 and negative terminal T2 (as shown in Fig. 1(A)) are respectively disposed within positive terminal groove 57 and negative terminal groove 59. Preferably, terminals T1, T2 may contact the incoming terminals or output terminals of either battery-powered drill 70 or battery charger 10. As shown in Fig. 1(A), terminals T4, T5 are provided on the interior of the connector 60 to connect to temperature sensor TM and terminal T6 is provided to connect to EEPROM 61.

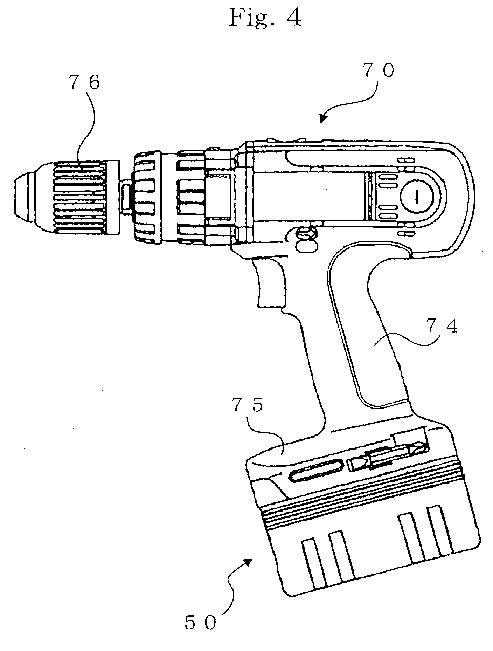

Battery pack 50 may be mounted on battery-powered drill 70 as shown in Fig. 4. Battery-powered drill 70 may include battery pack mounting portion 75 that is located below grip (or handle) portion 74. Battery pack mounting portion 75 may include fitting portions that engage fitting portions 52 of battery pack 50. Further, a hook groove (not shown) may engage hook 54 of battery pack 50. Thus, battery pack 50 may be connected to battery pack mounting portion 75 in a freely attachable/detachable manner.

Battery pack 50 supplies power to battery-powered drill 70 via positive terminal T1 and negative terminal T2 of battery pack 50, which are connected to incoming terminals (not shown) disposed on the housing of battery-powered drill 70. In this particular embodiment, the supplied power causes the motor (not shown) to rotate chuck 76.

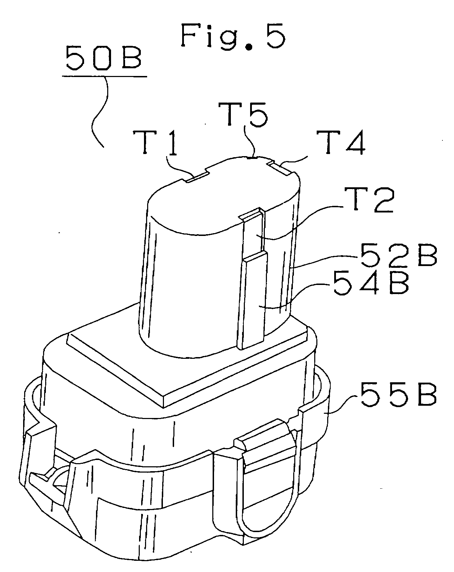

Fig. 5 shows an external appearance of battery pack 50B that does not have an EEPROM, but may include e.g., nickel metal hydride batteries. Fitting portion 52B may be formed in a substantially cylindrical manner and base portion 55B may have a substantially prism-like shape. Key-shaped key portion 54B may be disposed on a lateral side of fitting portion 52B. Positive terminal T1 may be connected to a positive battery terminal and negative terminal T2 may be connected to a negative terminal. Sensor terminals T4, T5 may be connected to temperature sensor TM, such as a thermistor, and may be disposed on an upper portion of battery pack 50B.

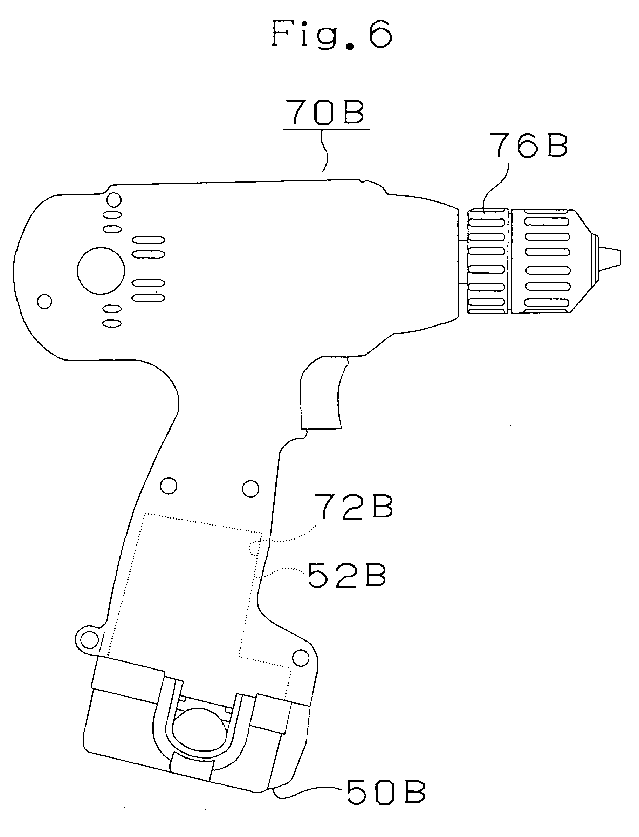

Fig. 6 shows battery pack 50B of Fig. 5 mounted on battery-powered drill 70B, which has receiving portion 72B for receiving fitting portion 52B of battery pack 50B. Chuck 76B is rotated by means of a motor (not shown) upon supply of electric power through positive terminal T1 and negative terminal T2 of battery pack 50B.

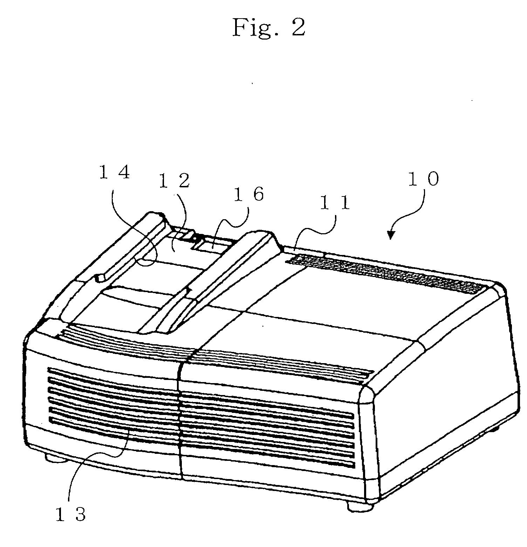

A design for battery charger 10 that will permit direct charging of battery pack 50 having EEPROM 61 will now be-explained with reference to Figs. 1(A) and 2. As shown in Fig. 2, battery charger 10 includes housing 11, which also may preferably comprise a resin material, and fitting portion 12 that enables mounting of battery pack 50. Air-suction aperture 13 draws air from the exterior. This air is forced into the battery pack 50 by means of a cooling fan (not shown) disposed within housing 11. Various indicators (not shown) may also be provided on housing 11, such as a battery voltage indicating lamp that may indicate the battery voltage during a charging operation or other condition indicating lamps for indicating operating conditions of battery charger 10. A control circuit may control the illumination of these indicators and will be further described below.

Fitting portion 12 may have guides 14 adapted to guide fitting grooves 53 of battery pack 50. Forced air outlet 16 preferably communicates with ventilating outlet 56 of battery pack 50. A hook groove (not shown) may be provided within forced air outlet 16 and hook 54 of battery pack 50 may engage the hook groove. Fitting portion 12 also may have output terminals t1, t2 that electrically couple to positive terminal T1 and negative terminal T2 of battery pack 50. A connector (not shown) that can be connected to connector 60 of battery pack 50 also may be provided. Terminals t4, t5 may be disposed within the connector in order to connect to temperature sensor TM of battery pack 50. Further, communicating terminal t6 also may be disposed in the connector in order to connect to EEPROM 61 of battery pack 50 or control portion 41 of adapter 30.

As shown in Fig. 1(A), the control circuit of battery charger 10 may include power source circuit 22 that generates an appropriate charging current to be supplied to the rechargeable batteries. Charge current controller 24 may control the supply of charging current to the batteries and preferably comprises a switch. Control portion 26 may execute charging programs stored in memory 29 and the control portion 26 is preferably disposed in a processor, such as a microprocessor or central processing unit. Battery voltage determination portion 27 may be included within the processor or may be a separate component adapted to detect whether a rechargeable battery has been coupled to battery charger 10 and may detect the voltage of battery 58. Battery temperature detecting portion 28 also may be included within the processor or may be a separate component that receives temperature signals from a battery temperature sensor TM within battery pack 50 and generates battery temperature information.

Power source circuit 22 preferably provides a charging capacity that is suitable for batteries 58. Memory 29 may store one or more charging programs, such as the charging programs described in commonly assigned US Patent Nos. 6,075,347 and 6,124,698, and European Patent Publication Nos. 982829, 1039612 and 1039613. These patents and published patent applications disclose battery charging techniques that, generally speaking, involve detecting the battery temperature of batteries 58 using temperature sensor TM and increasing or decreasing the charging current based upon the detected temperatures. Moreover, other charging techniques may be utilized with the present teachings, such as the charging techniques described for example in US Patent Nos. 5,550,453, 5,627,451, 5,945,803 and 6,008,628 and European Patent Publication No. 966089. A person of skill in the art will immediately recognize the advantages of combining the present teachings with one or more of the teachings of the above-mentioned patents and patent applications.

Control portion 26 preferably generates a temperature increase value (i.e. differentiates the changing battery temperature by time) from temperature values generated by temperature detecting portion 28. Control portion 26 then generates a specific current value to apply to batteries 58 based on the current value controlling information stored in memory 29. The current value is output to charge current controlling portion 24 as a current instructing value. Charge current controlling portion 24 is also capable of controlling power source circuit 22 based on the current instructing value from control portion 26 and in order to adjust the charging current supplied to battery pack 50.

When battery pack 50 is mounted on fitting portion 12, control portion 26 preferably utilizes a specific algorithm to control power source circuit 22, charge current controlling portion 24, voltage detecting portion 27, temperature detecting portion 28 and memory 29. As a result, batteries 58 within battery pack 50 are charged. During the charging operation, the capacity indicating lamp for indicating the storage capacity of battery pack 50 may be illuminated. Upon completion of the charging operation, charging is terminated and the same lamp may accordingly indicate charge completion. Control portion 26 may also include communicating port 26a that may, e.g., receive charging instructions from adapter 30 or battery pack 50.

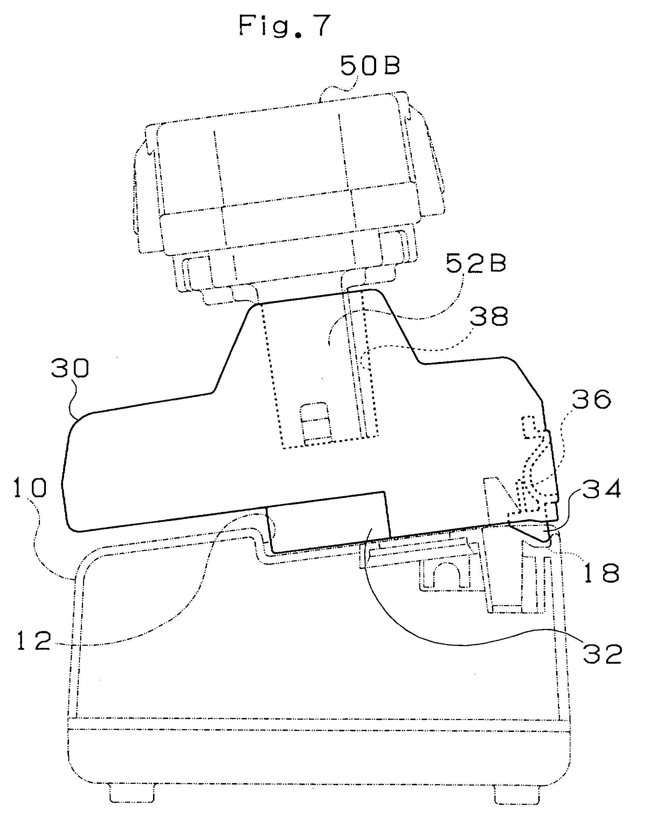

Fig. 7 shows adapter 30 according to a first representative embodiment. Fig. 1(B) shows a block diagram of a representative circuit arrangement for adapter 30, charger 10 and battery pack 50B. Specifically, adapter 30 is interposed between the battery charger 10 and battery pack 50B and enables charging of battery pack 50B, which does not include a memory that contains charging parameters or other battery identification information that may be provided to battery charger 10.

As shown in Fig. 7, fitting portion 32 may be disposed on a lower surface of adapter 30 and may be inserted into fitting portion 12 of battery charger 10, which was described above with respect to Fig. 2. Fitting hole 38 may be fitted into fitting portion 52B of battery pack 50B, which was described above with reference to Fig. 5. Hook 34 is urged in the vertical direction by lever 36 that is provided on a lateral surface of battery pack 50B.

Fitting portion 32 may have a positive incoming terminal, a negative incoming terminal and a connector (not shown) adapted to connect to positive output terminal t1, negative output terminal t2 and the connector of battery charger 10. Fitting hole 38 also may have a positive output terminal, a negative output terminal and sensor terminals (not shown) adapted to connect to positive terminal T1, negative terminal T2 and sensor terminals T3, T5 of battery pack 50B as shown in Fig. 5. Battery charger 10 may be connected to adapter 30 by engaging hook 34 on the lateral side with hook groove 18 of battery charger 10.

As shown in Fig. 1(B), adapter 30 may include control portion 41, battery temperature determining portion 47 for detecting the battery temperature and voltage detecting portion 43 for detecting the voltage of the batteries 58. Preferably, these functions are performed by a processor based upon programs stored in a memory, although these functions may be performed by separate components. Preferably, battery charger 10 supplies a regulated voltage to these control circuits. Control portion 41 may perform communicating functions in order to communicate information to control portion 26. More particularly, communication is established between communicating port 41a and communicating port 26a of control portion 26.

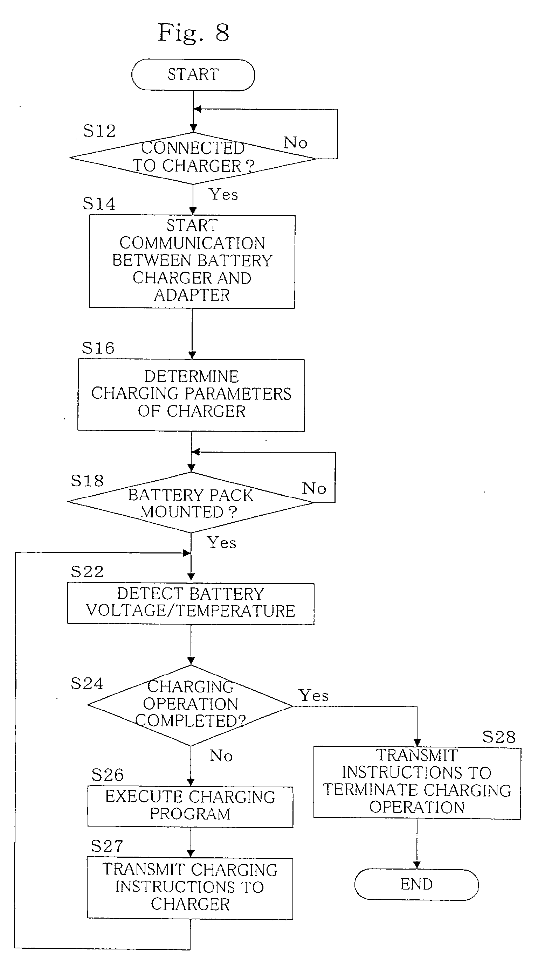

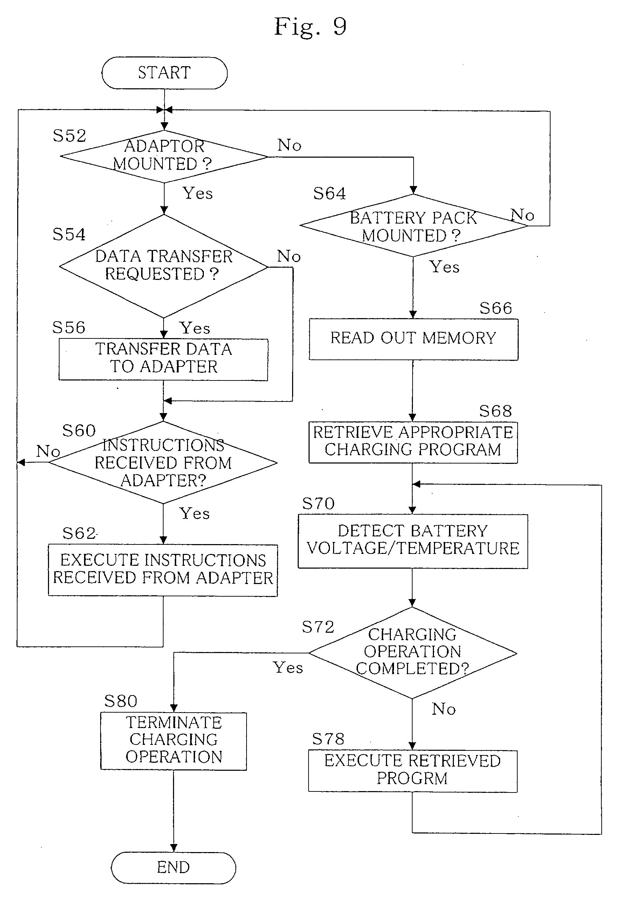

Battery charging operations using adapter 30 and battery charger 10 will further be explained with reference to the flowcharts of Figs. 8 and 9. Fig. 8 shows operating steps performed by adapter 30 and Fig. 9 showsoperating steps performed by battery charger 10.

Referring to Fig. 9, if battery pack 50 having EEPROM 61 is mounted on the battery charger 10, the charging operations are performed in accordance with the charging control program stored in EEPROM 61. On the other hand, if adapter 30 is mounted on battery charger 10 and adapter 30 stores a charging program, current is supplied to batteries 58 in accordance with the instructions generated by adapter 30.

As shown in Fig. 9, if battery pack 50 is directly mounted on the battery charger 10 as shown in Fig. 1(A) (i.e. without adapter 30), mounting (S52) is determined by the control portion 26 by detecting the battery voltage (using voltage detecting portion 27) and/or by detecting the battery temperature (using the temperature detecting portion 28) according to step (S64). If battery pack 50 is mounted, information stored in EEPROM 61 is read out (S66). The appropriate charging control program stored in memory 29 is selected and/or the charging parameters from EEPROM are utilized by the charging program stored in memory 29 (S68). The voltage/temperature of batteries 58 are determined by voltage detecting portion 27 and temperature detecting portion 28 (S70).

Based upon the battery voltage/temperature information (S72), the processor determines whether the charging operation has been completed. If the charging operation has not been completed (S72:NO), the battery charging current is determined based upon the battery voltage/temperature by executing the retrieved program (S78). The appropriate battery charging current is supplied from the power source circuit 22 to the batteries 58 until the charging operation is completed. Preferably, a temperature value is output from temperature detecting portion 28 and the temperature value is differentiated to obtain a temperature increase value.

Although various techniques may be utilized to determine the appropriate charging technique, and the present teachings are not limited to any particular charging technique, the specific charging current value may be selected based upon a control program stored in memory 29. The appropriate charging current value may be output to the charge current controlling portion 24 as a current instructing value for controlling the charge current. When the processor determines that the charging operation has been completed based upon the battery temperature and voltage (S72: YES), charging is terminated (S80).

On the other hand, if adapter 30 is interposed between the battery charger 10 and the battery pack 50B as shown in Fig. 1(B), a representative method for charging batteries 58 will now be explained with reference to Figs. 8 and 9.

Upon determination that adapter 30 has been mounted or connected to battery charger 10 (S12 of Fig. 8: YES), control portion 41 of adapter 30 initiates communication with control portion 26 of battery charger 10 (S14). Inquiries are first made to control portion 26 of battery charger 10 with respect to the charging parameters of battery charger 10, such as the maximum output current. In response to this inquiry (S54 of Fig. 9: YES), control portion 26 of battery charger 10 transmits charging parameters to control portion 41 of adapter 30 (S56). As a result, adapter 30 may utilize the charging parameters of battery charger 10 to optimize the charging operation (S16 of Fig. 8).

Upon mounting of battery pack 50 on adapter 30 as shown in Fig. 1(B), control portion 41 detects mounted battery pack 50 by detecting the battery voltage (using voltage detecting portion 43) and/or by detecting the battery temperature (using temperature detecting portion 47) (S18: YES). In order to initiate the charging operation, control portion 41 first detects the voltage/temperature of batteries 58 (S22). The processor then. determines whether charging operations have been completed based upon the battery voltage/temperature. (S24). The charging program is executed (S26) and instructions relating to the appropriate charge current value, which have been determined based upon the battery voltage/temperature, are transmitted (S27) to control portion 26 of battery charger 10 until the charging operation has been completed (S24: NO).

Control portion 26 of battery charger 10 remains in a stand-by condition in order to receive instructions from adapter 30 (S60) if adapter 30 has been mounted (S52 of Fig. 9: YES). Upon receipt of instructions from adapter 30 concerning the charge current value, as described above (S60: YES), the power source circuit 22 is controlled based upon such instruction values, and the appropriate charging current is supplied to battery pack 50B.

Upon detection of completion of charging operations by control portion 41 of adapter 30 (S24 of Fig. 8: YES), the charging operation is terminated (S28). In accordance therewith, the battery charger 10 completes the charging operations (S62 of Fig. 9).

According to the first representative embodiment, the power source circuit 22 is controlled in accordance with instructions from control portion 41 of adapter 30. Thus, battery pack 50B, which does not have memory, can be charged, even though battery charger 10 does not contain an appropriate charging program. Further, battery charger 10 can be remotely controlled by adapter 30 upon detection of the presence of the battery pack 50B. As a result, battery pack 50B, which does not have memory, can be charged by battery charger 10, which was originally designed to charge battery pack 50 that has a memory storing charging parameters and/or battery identification information.

Control portion 26 of battery charger 10 may transmit charging parameters of the power source circuit in response to inquiries from adapter 30. Accordingly, controlling the charging current supplied to batteries 58 enables optimal charging operations.

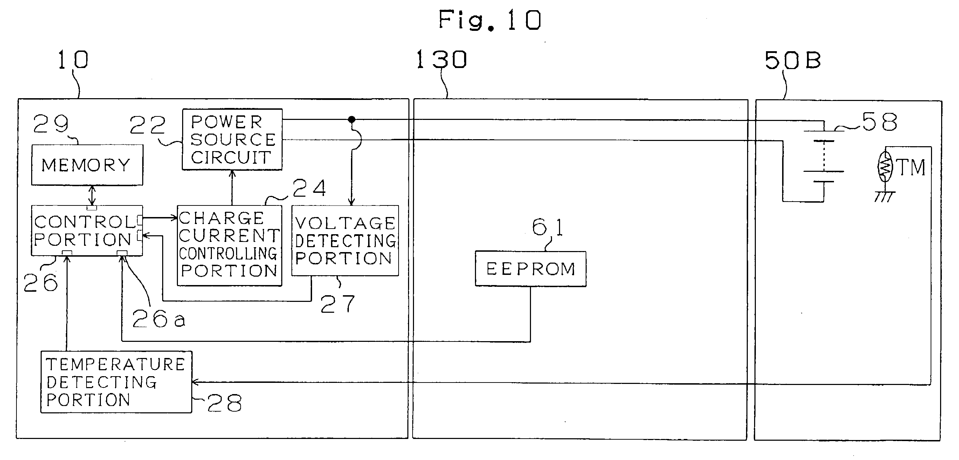

A modification of the first representative embodiment is shown in Fig. 10, which is a block diagram of adapter 130. Adapter 130 includes memory 61 (e.g. EEPROM) that may store a charging program for battery pack 50B, which does not have a memory, or may store battery identification information. Battery charger 10 may execute a charging program stored in memory 29 based upon data from memory 61 or battery charger 10 may execute the charging program stored in memory 61. This simple arrangement also makes it possible to charge battery pack 50B, which could not be charged by battery charger 10 without adapter 130. This arrangement may be realized without providing a remote control function for battery-charger 10.

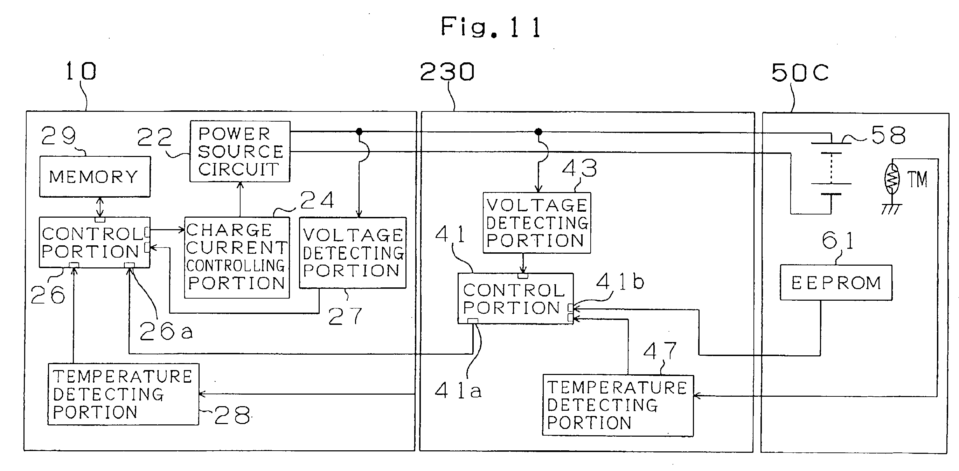

A second modification of the first representative embodiment is shown in Fig. 11, which is a block diagram of adapter 230. Battery charger 10 may be identical to battery charger 10 of Fig. 1. Although battery pack 50C has EEPROM 61, a control program corresponding to the charging characteristics of the battery pack 50C is not stored in battery charger 10. Instead, control programs corresponding to the charging characteristics of battery pack 50C are stored in control portion 41 of adapter 230. When battery pack 50C is mounted on adapter 230, control portion 41 of adapter 230 reads out instructions stored in EEPROM 61 through communication port 41b. An appropriate control program corresponding to these instructions is retrieved and battery charger 10 is remotely controlled to perform the charging operation as described above.

Because control portion 41 of adapter 230 remotely controls battery charger 10 in accordance with instructions stored in EEPROM 61 of battery pack 50C in this embodiment, battery pack 50C can be appropriately charged, even though battery charger 10 was not originally designed to charge battery pack 50C.

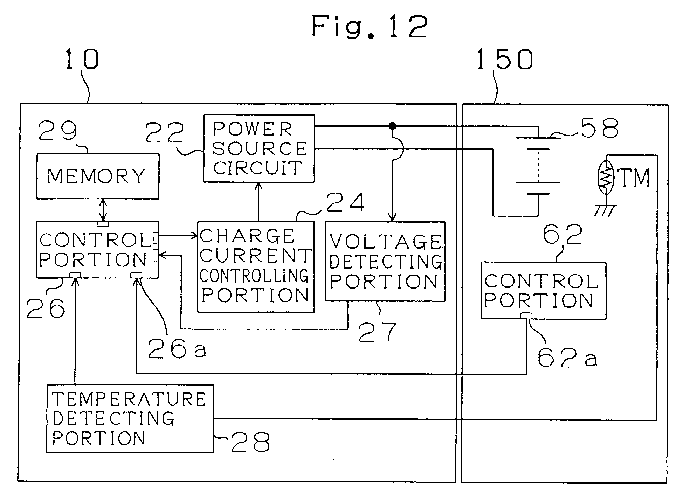

A third modification of the first representative embodiment is shown in Fig. 12, which is a block diagram of battery pack 150. In the third modified example, battery pack 150 includes control portion 62, which is similar to control portion 41 provided in adapter 30. Control portion 62 includes communication port 62a that communicates with communication port 26a of control portion 26 in order to receive information, such as battery temperature information, battery temperature increase information and/or battery voltage information. - Appropriate current values are determined based upon this information and the charging operation is enabled. Accordingly, optimal charging operations can be performed without the necessity of storing any data for charging battery packs in battery charger 10.

Battery chargers may preferably communicate with various types of external apparatus in order to properly control the charging operation in accordance with instructions from the external apparatus. Thus, battery charger 10 may perform a charging operation based upon control instructions from an exterior test device connected to control portion 26 during a final stage of manufacturing, e.g. control instructions for illuminating various LEDs or rotating the cooling fan, etc. In other words, because performance tests can be performed without the necessity of providing testers for the respective purposes, performance tests may be performed in a remarkably simple manner.

While the first embodiment has been explained above with reference to an example in which remote control of the battery charger is- performed using an adapter and/or a battery pack, the battery chargers may also include communicating functions that may be remotely controlled by communicating cables of computers or other external equipment.

### Second Detailed Representative Embodiment

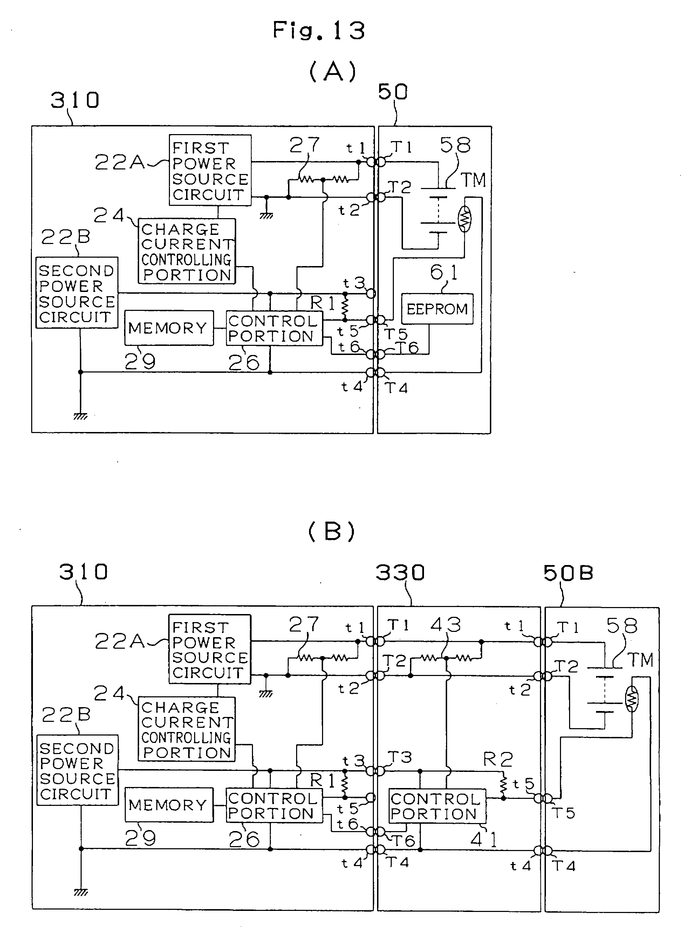

A battery charger 310 according to the second representative embodiment is designed to charge battery packs 50 having a memory or adapters 330 having a memory. Adapter 330 is constructed to control the battery charger 310 in order to charge battery pack 50B that does not have a memory. Fig. 13(A) is a block diagram showing battery pack 50 (having EEPROM 61) mounted on battery charger 310. On the other hand, Fig. 13(B) is a block diagram showing battery pack 50B (not having a memory) mounted on battery charger 310 with adapter 330 interposed between battery pack 50B and battery charger 310. Because the external appearance of- battery charger 310 may be similar to the first embodiment shown in Fig. 2, reference will be made to Fig. 2 and further explanation of the external appearance are not necessary. Moreover, the housing designs show in Figs. 3-7 also may be utilized for battery powered drill 70, battery pack 50 and battery pack 50B.

As shown in Fig. 13(A), a control circuit of battery charger 310 may include first power source circuit 22A, which may serve as a charge power source portion for charging battery pack 50. Battery charger 310 may also include charge current controlling portion 24, control portion 26, voltage detecting portion 27 (preferably comprising a pair of resistors), resistance R1 for battery temperature detection and memory 29. A second power source circuit 22B may supply a regulated voltage (e.g. 5V) to control portion 26 and to other circuits.

First power source circuit 22A preferably has a sufficient charge current capacity to charge batteries 58. A transformer (not shown) may be coupled to a commercial power source and may supply power to both first power source circuit 22A and second power source circuit 22B. First power source circuit 22A preferably adjusts the charging current supplied to the batteries using varying duty ratios. Second power source circuit 22B preferably supplies a regulated voltage of 5V. This regulated voltage may be supplied to an external apparatus (e.g. adapter 330) through output terminals t3, t4. Output terminal t4 is also preferably connected to the ground of second power source circuit 22B.

As shown in Fig. 13(A), resistance R1 is utilized to generate battery temperature information, because it is serially connected to temperature sensor TM. The resistance of temperature sensor TM varies depending on the battery temperature. Control portion 26 determines the battery temperature during the charging operation based upon changes in potential between resistance R1 and temperature sensor TM. Control portion 26 also detects the battery voltage based upon changes in potential between the resistances of voltage detecting portion 27, which includes a pair of resistors. Memory 29 may store current value controlling information, such as look up tables or other charging programs.

Upon determining a temperature increase value (by differentiating the temperature values calculated based upon the potential across resistance R1), control portion 26 calculates a specific current value based upon the current value controlling information stored in memory 29. The current value is then output to charge current controlling portion 24 as a current instructing value. Charge current controlling portion 24 is also capable of controlling the first power source circuit 22A based upon the current instructing value generated by control portion 26 and adjusting the charging current for battery pack 50.

When battery pack 50 is mounted on battery charger 310, control portion 26 controls first power source circuit 22A and charge current controlling portion 24 using a specified algorithm and batteries 58 within battery pack 50 are charged. During the charging operation, the capacity indicating lamp may be illuminated to indicate the storage capacity of battery pack 50. Upon termination of the charging operation, the same lamp may indicate charge completion. Control portion 26 preferably executes various instructions, such as charging that is controlled by adapter 330 in a manner that was described above with respect to Figs. 8 and 9.

Fig. 13(B) shows a block diagram of adapter 330 mounted on battery charger 310 and battery pack 50B is mounted on adapter 330. Adapter 330 enables charging of battery pack 50B, which does not have a memory, by means of battery charger 310.

Adapter 330 includes control portion 41 that operates using the regulated power supply transmitted by terminals t3, t4 from battery charger 310. Resistance R2 may be utilized to detect the battery temperature. Voltage detecting portion 43 may include a pair of resistances that are adapted to detect the voltage of batteries 58. Control portion 41 also may include communicating functions and information may be communicated to and from control portion 26 of battery charger 310 through communicating terminal T6.

Because charging operations using adapter 330 and battery charger 310 of the second embodiment are similar to the first embodiment described with respect to Figs. 8 and 9, further detailed explanation is not necessary. It is sufficient to note that temperature values may be generated based upon resistance R1 and thermistor TM and battery voltage values may be determined based upon the pair of resistors 43 and the operating steps shown in Figs. 8 and 9 may also be utilized with the second embodiment.

Battery charger 310 preferably includes second power source circuit 22B in order to supply a regulated voltage to control portion 26 and to control portion 41 of adapter 330 through output terminals t3, t4. Because a regulated voltage of 5V is utilized by control portion 41 and control portion 26, instead of the charging voltage from first power source circuit 22A, the regulated power supply is free of switching noises caused by the duty cycle generated by charge current controlling portion 24. As a result, control portion 41 of adapter 330 may accurately detect the temperature of batteries 58 based upon the potential of resistance R2, which is serially connected to thermistor TM of battery pack 50B. Accordingly, precise control of the charging operation is possible.

Moreover, it is not necessary to provide a separate power source circuit in order to supply power to control portion 41. It is also possible to detect mounting of the battery pack 50B without detecting the supply of charge current from the battery charger 310.

The output terminal t4 is coupled to a ground that is separate and distinct from negative output terminal t2, which is part of the battery charging circuit. Because a relatively large current will flow across negative output terminal t2, contact resistance between negative output terminal t2 of adapter 330 and negative terminal T2 of battery pack 50B causes a large voltage drop. The ground level (voltage) of negative terminal T2 will therefore fluctuate in correspondence with this voltage drop (offset voltage). Because second power source circuit 22B, which generates a relatively low current (and no offset voltage is generated), is coupled to output terminal t4, the ground level of terminal T4 of battery pack 50B does not fluctuate. Thus, the battery temperature may be accurately obtained based upon the voltage across resistance R2.

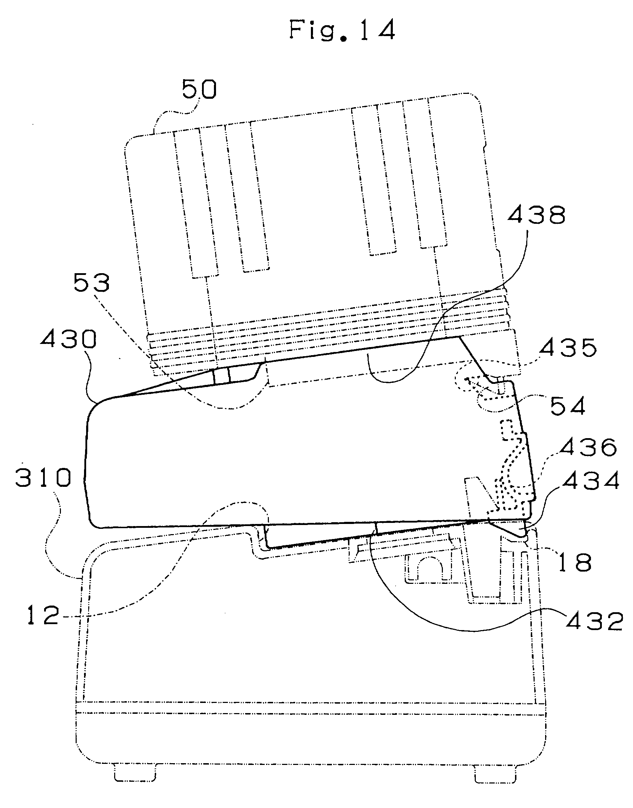

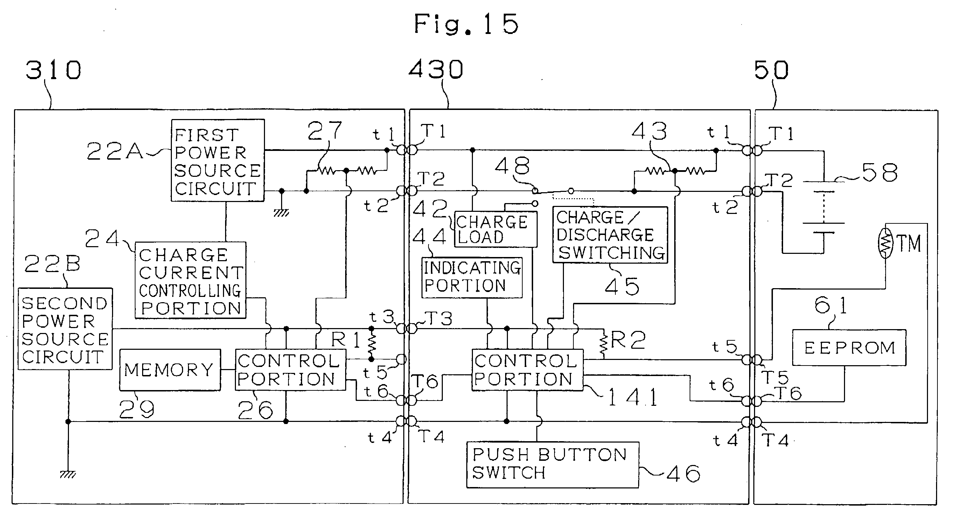

In another preferred embodiment, adapter 430 will be described with reference to Figs. 14-17, which adapter 430 can eliminate memory effects of battery pack 50. Fig. 14 shows adapter 430 mounted on battery charger 310 and Fig. 15 is a block diagram of the control circuits of adapter 430 and battery charger 310. Adapter 430 is interposed between battery charger 310 and battery pack 50 in order to perform a discharge operation of batteries 58 of the battery pack 50. This discharge operation may eliminate memory effects of battery pack 50.

As shown in Fig. 14, fitting portion 432 is preferably inserted into fitting portion 12 of the battery charger 310. Fitting portion 432 may be formed on a lower surface of adapter 430. Fitting portion 438 is preferably inserted into fitting groove 53 of battery pack 50, as described above with reference to Fig. 3. Fitting portion 438 may be formed
- on an upper surface of adapter 430. Hook 434 is urged in the vertical direction by-a lever 436 and hook groove 435 is provided on a lateral surface of adapter 430.

Positive incoming terminal T1, negative incoming terminal T2 and a connector are disposed on fitting portion 432, which is on the lower surface of adapter 430. These terminals and connector are adapted to be connected to positive output terminal t1, negative output terminal t2 and the connector of the battery charger 310, respectively. The connector preferably includes terminals T3, T4 that are adapted to connect to output terminals t3, t4 of battery charger 310 in order to supply power to the controller. Communicating terminal T6 is adapted to connect to terminal t6 in order to communicate with control portion 26 of battery charger 310.

On the other hand, fitting portion 438, which is on the upper surface of adapter 430, has positive output terminal t1, negative output terminal t2 and sensor terminals t4, t5. These terminals are adapted to connect to positive terminal T1, negative terminal T2 and sensor terminals T4, T5 of the battery pack 50, respectively. Communicating terminal t6 is adapted to couple to EEPROM 61.

As shown in Fig. 15, the control circuit of adapter 430 may include control portion 141 that operates using the regulated power supply from second power source circuit 22B of battery charger 310. Resistance R2 may be included to determine the battery temperature and voltage detecting portion 43 may be included to determine the voltage of batteries 58. Indicating portion 44 may indicate the capacity of battery pack 50 and push button switch 46 may be provided to start a refreshing (discharge) operation for battery pack 50. Discharge load 42 may include a resistance that functions as a load during the refreshing operation. A relay may be utilized to switch between the charging operation and the discharge (refreshing) operation. Finally, charge/discharge switching portion 45 may be utilized to control relay 48.

Control portion 141 of adapter 430 may include communication functions in order to communicate information to/from control portion 26 of battery charger 310. Thus, adapter 430 may also include communication- terminal t6 in order to read out information stored in EEPROM 61 of battery pack 50.

When battery pack 50 is mounted, adapter 430 sends instructions to control portion 26 of battery charger 310 in order to control the charge current. When push button switch 46 is actuated, relay 48 connects to charge load 42 through charge/discharge switching portion 45 in order to discharge any power remaining in batteries 58. During this refreshing operation, adapter 430 may twice discharge batteries 58 and the indicating portion 44 may indicate the capacity at the time of the second discharge. Discharge may be performed a third time and operations are completed accordingly. In other words, by twice performing the discharge operation, the memory effect may be almost completely eliminated. Preferably, the discharge operation is twice performed, because performing the discharge operation only once may not eliminate the memory effect. However, the life of the batteries may be reduced if the discharge operation is performed more than three times. Because memory effects are not usually generated in batteries used for power-driven tools as a result of ordinary use, the refreshing circuit will increase the cost of the battery charger, but may not be required for most operations. However, if adapter 430 includes the refreshing circuit, memory effects of -secondary batteries can be reduced without increasing the cost of the battery charger.

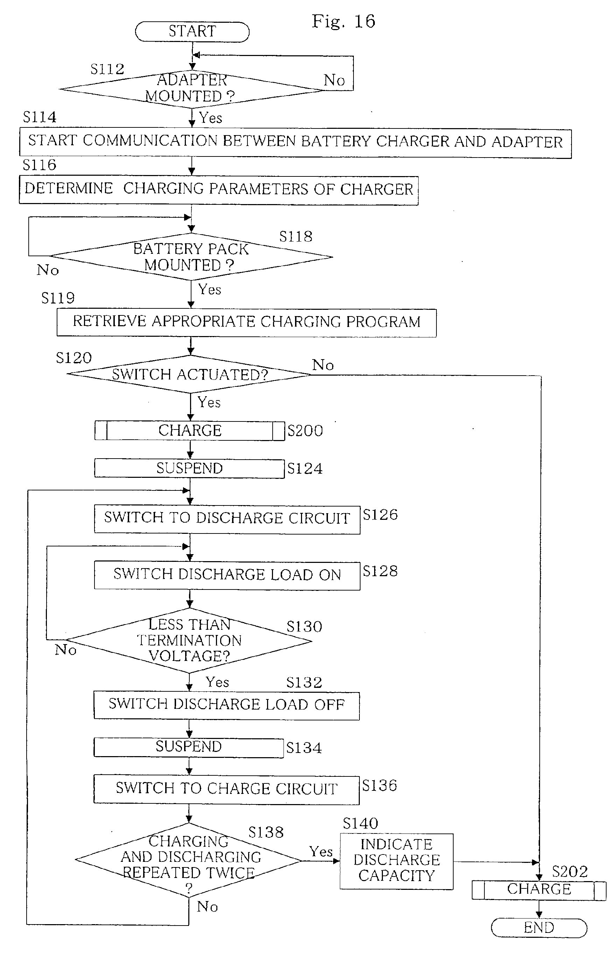

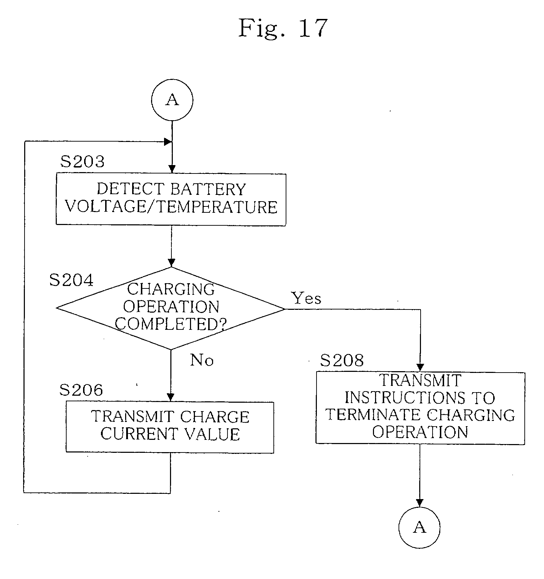

Charging operations of the adapter 430 and the battery charger 310 will now be explained with reference to the flowcharts of Figs. 16 and 17. If adapter 430 is not mounted, battery charger 310 performs the charging operation in accordance with its own control program in a manner as described above with reference to Fig. 9. On the other hand, if the adapter 430 has been mounted, instructions are transmitted by adapter 430 and power source circuit 22 supplies current in accordance with the instruction values.

A representative charging operation will now be explained for the case in which adapter 430 is interposed between battery charger 310 and battery pack 50. Fig. 17 shows a subroutine of charging operations (S200, S202) within a main routine performed by adapter 430 as shown in Fig. 16. Control portion 141 of adapter 430 first detects the voltage/temperature of batteries 58 using voltage detecting portion 43 and resistance R2 (S203). Control portion 141 then determines whether the charging operation has been completed based upon the battery voltage/temperature (S204). Appropriate charging current values are determined based upon the battery voltage/temperature and are supplied to control portion 26 of battery charger 310 (S206) until the charging operation has been completed (S204: NO).

Control portion 26 of battery charger 310 remains in a stand-by condition in order to receive instructions from adapter 430 (S60) in the event that adapter 430 is mounted (S52 of Fig. 9: YES). Upon receipt of instructions relating to the charge current values from adapter 430, power source circuit 22 is controlled on the basis of such instruction values, and an appropriate charging current is supplied to battery pack 50.

Upon detection of completion of the charging operation by adapter 430, (S204: YES), the charging operation will be terminated (S208) and battery charger 310 completes the charging operation (S62 of Fig. 9).

Representative charging and refreshing operations, which may be performed by adapter 430, will now be explained with reference to the flowchart of Fig. 16. Upon detection of mounting adapter 430 to battery charger 310 (S122: YES), control portion 141 of adapter 430 initiates communications with control portion 26 of battery charger 310 (S114). Inquiries are first made to control portion 26 with respect to the charging parameters of battery charger 310, such as the maximum supply current. After the charging parameters are sent from control portion 26 to control portion 141, the charging parameters of battery charger 310 are recognized (S116).

Upon mounting battery pack 50 to adapter 430 as shown in Fig. 15, control portion 141 determines mounting based upon detection of the battery voltage by voltage detecting portion 43 and/or based upon detection of the battery temperature by temperature detecting portion 28 (S118: YES). Thereafter, information is read out from EEPROM 61 and an appropriate control program is retrieved based upon the type of the battery pack 50 that has been mounted. The control program may be selected from a set of control programs for various types of battery packs that are stored in EEPROM 61 (S119).

The processor then determines whether switch 46 has been actuated to initiate a refreshing operation (S120). If switch 46 has not been actuated (S120: NO), charging processes are performed using the subroutine that was described above with reference to Fig. 17 (S202). On the other hand, if switch 46 has been actuated (S120: YES), charging processes are first performed using the subroutine of Fig. 17 (S200) and then operations are suspended upon completion of charging operations until the batteries 58 have cooled down.

Thereafter, discharge (refreshing) is started for the first time. In this case, relay 48 is actuated to connect batteries 58 to discharge load 42 (S126) and discharge load 42 is switched ON to start discharging batteries 58 (S128). The total amount of discharged power may be monitored during this discharging operation in order to determine the charging capacity of batteries 58. In addition, the processor may determine whether the voltage of batteries 58 is less than a voltage for terminating discharge (S130). Prior to reaching a value that is less than the discharge terminating voltage (130:No), the program returns to step 128 to continue discharging. Upon reaching a value that is less than the discharge terminating voltage (S130: YES), the discharge load is switched OFF (S132), and operations are suspended until the batteries have cooled down (S134). The battery temperature of e.g. nickel metal hydride batteries, is likely to substantially increase due to the rapid discharge. Relay 48 is then actuated in order to connect batteries 58 to power source circuit 22 of battery charger 310 (S136).

The processor then determines whether the charging and discharging operations have been repeated twice (S138). Upon completion of the first charging and discharging operation (S138: NO), the program returns to step 200 to perform a charging and discharging operation for the second time. Upon repeating charging and discharging operations twice (S138: YES), the discharge capacity, which has again been monitored during the second discharge, is indicated by indicating portion 44. For instance, if 80% of the total battery capacity remains available for charging, "80%" may be indicated. Thereafter, charging is performed for the last time (S202) to accordingly complete the charging operation.

Because the discharge operation is performed twice by adapter 430, it is possible to almost completely eliminate memory effects. Further, it is possible to accurately indicate the battery capacity, because the discharge capacity during the second discharge operation is measured.

Battery charger 310 may include second power source circuit 22B in order to provide a regulated power supply to control portion 26 and to control portion 141 of adapter 430 through output terminals t3, t4. As discussed above, switching noises in the regulated power supply are avoided, because the regulated power supply is separate from the battery charging circuit. As a result, the battery temperature can be more accurately determined and precise adjustment of the charging operation is possible. Further, it is not necessary to provide a separate power source circuit within adapter 430 in order to provide a regulated power supply to control portion 141, thereby reducing the cost of adapter 430.

Moreover, battery charger 310 includes two separate ground lines for second power source circuit 22B and first power source circuit 22A, respectively. Therefore, the ground voltage level of terminal T4 of battery pack 50 will not fluctuate and it is possible to more accurately measure the battery temperature based upon the voltage of resistance R2.

The second representative embodiment has been explained with reference to operations in which adapter 330 and adapter 430 were mounted to the battery charger. However, the battery charger according to the second representative embodiment is also capable of performing appropriate charging operations using various external apparatus that do not have remote control functions.

## Claims

1. An adapter capable of coupling a rechargeable battery pack for a power tool to a battery charger comprising:
a first-terminal adapted to receive data from the rechargeable battery pack,
a second terminal adapted to communicate instructions to the battery charger,
a third terminal adapted to communicate a charging current from the battery charger to the rechargeable battery pack,
a processor and
a memory storing a charging program for the rechargeable battery pack, wherein the processor generates charging current instructions that are communicated to the battery charger in order to control the supply of charging current to the rechargeable battery pack.

2. An adapter as in claim 1, wherein the processor is programmed to read information stored in a memory in the rechargeable battery pack and the processor utilizes the information to generate optimal charging current instructions.

3. An adapter as in claims 1 or 2, wherein the processor is programmed to monitor one or more battery conditions during execution of the charging program in order to generate optimal charging instructions based upon changes in the battery conditions.

4. An adapter as in claim 3, wherein the battery conditions comprise a battery temperature increase rate during the charging operation.

5. An adapter as in any of claims 1-4, wherein the processor generates duty cycle instructions that are communicated directly to a charging current supply of the battery charger.

6. An adapter as in any of claims 1-5, wherein the processor is coupled to a first ground that is separate from a second ground coupled to a charging current circuit of the battery charger.

7. An adapter as in any of claims 1-6, wherein the processor is adapted to receive information from the battery charger concerning a charging current circuit of the battery charger and the processor generates charging instructions based upon the received information to optimally control the supply of charging current to the rechargeable battery pack.

8. An adapter as in any of claims 1-7, wherein the memory stores a charging program that is commonly utilized for a plurality of rechargeable battery packs that do not include a memory storing battery identification information or battery charging parameters.

9. An adapter as in any of claims 1-8, wherein the memory further stores a program adapted to eliminate memory effects in the rechargeable battery pack.

10. A battery charging apparatus comprising:
the adapter of any of claims 1-9 and
a battery charger comprising a power supply adapted to generate a charging voltage to supply to rechargeable batteries, a switch coupled to the power supply and a communication port coupled to the switch, wherein the communication port is adapted to transmit charging current control instructions generated by the adapter processor to the switch in order to directly control the charging current supplied to the rechargeable batteries and the adapter is removably detachable from the battery charger.

11. A battery charging apparatus as in claim 10, wherein the battery charger does not include a processor.

12. A battery charger for a power tool comprising a power supply adapted to generate a charging voltage and a switch coupled to the power supply in order to generate a charging current to supply to a rechargeable battery characterized by further comprising:
a communication port adapted to receive charging instructions to control the supply of charging current to the rechargeable battery, the instructions being generated by a processor that is external to the battery charger, wherein the communication port is directly coupled to the switch.

13. A battery charger as in claim 12, wherein the communication port is further adapted to communicate information concerning the power supply to the external processor, wherein the external processor generates charging instructions based upon the power supply information and communicates the charging instructions to the switch to optimally control the supply of charging current to the rechargeable battery.

14. A battery charger comprising:
a first regulated power supply adapted to generate a regulated voltage to be utilized by a processor and a battery temperature sensor,
a second regulated power supply utilized to generate the charging current,
a first ground line coupled to the second regulated power supply and
a second ground line coupled to the processor and the battery temperature sensor.

15. A battery charger as in claim 14, further comprising a communication port adapted to receive charging instructions to control the supply of charging current to the rechargeable batteries generated by a processor that is external to the battery charger.

16. A battery charger as in-claim 15, wherein the communication port is further adapted to communicate information concerning the power supply to the external processor, wherein the external processor generates charging instructions based upon the power supply information and communicates the charging instructions to the battery charger to optimally control the supply of charging current to the rechargeable batteries.

17. A battery charger as in any of claims 12-16, further comprising a memory that stores a program adapted to eliminate memory effects in the rechargeable batteries.

18. A method of controlling an apparatus comprising at least one method step corresponding to any feature of any one of claims 1 to 17.
